# EUROPEAN PATENT APPLICATION

(11) **EP 4 837 454 A1**
(43) Date of publication of application: **11.11.2026**
(21) Application number: 25772326.2
(22) Date of filing: 18.02.2025
(51) Int. Cl.: A45D 44/00, A45D 20/10, G06V 40/10

(54) **HAIR DRYER AND SYSTEM CONTROL METHOD**

(30) Priority: 11.03.2024 KR 20240033736
(71) Applicant: LG Electronics Inc., Yeongdeungpo-gu Seoul 07336 (KR)
(72) Inventor: CHOI, Gain, Seoul 07796 (KR); KIM, Jaeuk, Seoul 07796 (KR); CHOI, Kwangsoo, Seoul 07796 (KR)
(74) Representative: Ter Meer und Partner mbB
(86) International application number: PCT/KR2025/002329
(87) International publication number: WO 2025/192887

(57) **Abstract**

A hair dryer control method according to one embodiment of the present disclosure comprises the steps of: turning on the power source of the hair dryer; displaying at least one mode through a display of the hair dryer; receiving guide information from a server when a specific mode is selected; and controlling wind output through a discharge port of the hair dryer according to the received guide information.

## Description

### TECHNICAL FIELD

The present disclosure relates to a technology related to a hair dryer, and more particularly, to all types of hair dryers equipped with a display on one side and a communication function.

### BACKGROUND

The primary purpose of a hair dryer is to dry hair, although it has recently also been used for hair styling.

However, in the conventional hair dryer, a user has the inconvenience of having to manually control an operation of the hair dryer in real time according to needs of the user each time the hair dryer is used.

### DISCLOSURE

### Technical Problem

An object of one of embodiments of the disclosure is to provide a hair dryer that provides optimal styling to a user through communication with a mobile device, a server, and the like.

An object of one of embodiments of the present disclosure is to provide a hair dryer that provides a feedback result as quickly as possible after the operation of the hair dryer.

### Technical Solution

According to any one of embodiments of the present disclosure, a hair dryer control method includes powering on the hair dryer, displaying at least one mode through a display of the hair dryer, based on a specific mode being selected, receiving guide information from a server, and controlling airflow output through a discharge port of the hair dryer according to the received guide information.

The controlling may include changing at least one of a temperature, airflow intensity, or time of the airflow output through the discharge port of the hair dryer.

The guide information is generated based on an image captured through the camera of the mobile device, for example.

According to any one of embodiments of the present disclosure, the method may further include based on output of the airflow through the discharge port of the hair dryer being finished, displaying the image captured through a camera of the hair dryer.

The camera of the hair dryer and the display of the hair dryer are oriented in opposite directions (e.g., 180 degrees apart).

According to any one of embodiments of the present disclosure, a method of controlling a system including a mobile device and a hair dryer includes displaying a hairstyle selection option or a capture option, by the mobile device, based on the capture option being selected, capturing hair of a user through a camera installed on the mobile device, generating guide information by referring to a memory of the mobile device, transmitting the generated guide information to a server, by the mobile device, based on the hair dryer being powered on, receiving the guide information from the server, and controlling airflow output through a discharge port of the hair dryer according to the received guide information.

The memory may store mapping information that maps a scalp drying time and a hair drying time to each hairstyle.

It is also within the scope of the present disclosure for a third party to implement a computer-readable medium (e.g., application, memory, and software) that records a program to perform any one of the methods described above and the various embodiments described in this specification.

### Advantageous Effects

One of embodiments of the disclosure has an advantageous effect of providing a hair dryer that provides optimal styling to a user through communication with a mobile device, a server, and the like.

One of embodiments of the present disclosure has an advantageous effect of providing a hair dryer that provides a feedback result as quickly as possible after the operation of the hair dryer.

In addition to the advantageous effects above, it is obvious that effects that may be readily appreciated by those of skill in the art from the entire specification should also be considered.

### BRIEF DESCRIPTION OF THE DRAWINGS

FIG. 1 is a block diagram of an entire system including a hair dryer according to any one of embodiments of the present disclosure.
FIG. 2 illustrates a first screen of user experience/user interface (UX/UI) provided by a mobile device according to any one of embodiments of the present disclosure.
FIG. 3 illustrates a second screen of UX/UI provided by a mobile device according to any one of embodiments of the present disclosure.
FIG. 4 illustrates a third screen of UX/UI provided by a mobile device according to any one of embodiments of the present disclosure.
FIG. 5 illustrates a first screen of UX/UI provided by a hair dryer according to any one of embodiments of the present disclosure.
FIG. 6 illustrates a second screen of UX/UI provided by a hair dryer according to any one of embodiments of the present disclosure.

### BEST MODE FOR CARRYING OUT THE INVENTION

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In general, a suffix such as "module" and "unit" may be used to refer to elements or components.

Use of such a suffix herein is merely intended to facilitate description of the specification, and the suffix itself is not intended to give any special meaning or function. In the disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be directly connected with the other element or intervening elements may also be present. In contrast, when an element is referred to as being "directly connected with" another element, there are no intervening elements present.

A singular representation may include a plural representation unless it represents a definitely different meaning from the context.

Terms such as "include" or "has" are used herein and should be understood that they are intended to indicate an existence of several components, functions or steps, disclosed in the specification, and it is also understood that greater or fewer components, functions, or steps may likewise be utilized.

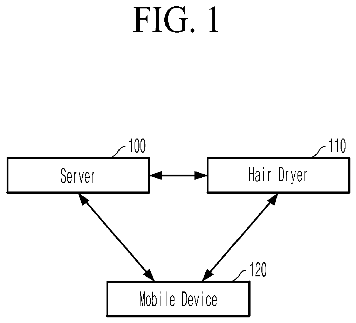

FIG. 1 is a block diagram of an entire system including a hair dryer of any one of embodiments of the disclosure.

As shown in FIG. 1, the entire system includes a server 100, a hair dryer 110, and a mobile device 120. However, even practicing only a part of the apparatus falls within the scope of the present disclosure, and it is a fundamental principle that the scope of the present disclosure should be determined based on the matters set forth in the claims.

In particular, the hair dryer 110 according to an embodiment of the present disclosure may be directly connected to the mobile device 120 via Bluetooth or the like, or may receive data uploaded by the mobile device to the server 100 via the server 100.

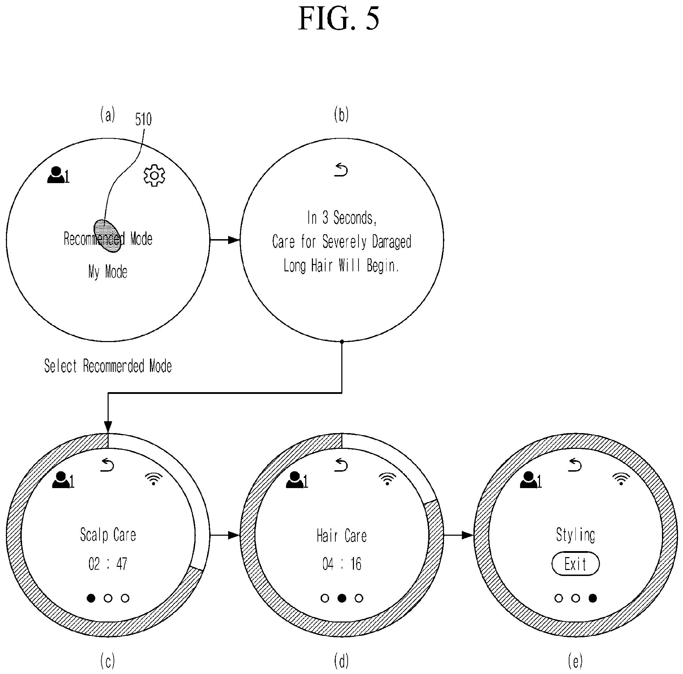

As shown in FIG. 5, the hair dryer 110 according to an embodiment of the present disclosure, which will be described in detail below, further includes a display on an opposite side of a discharge port, unlike conventional hair dryers.

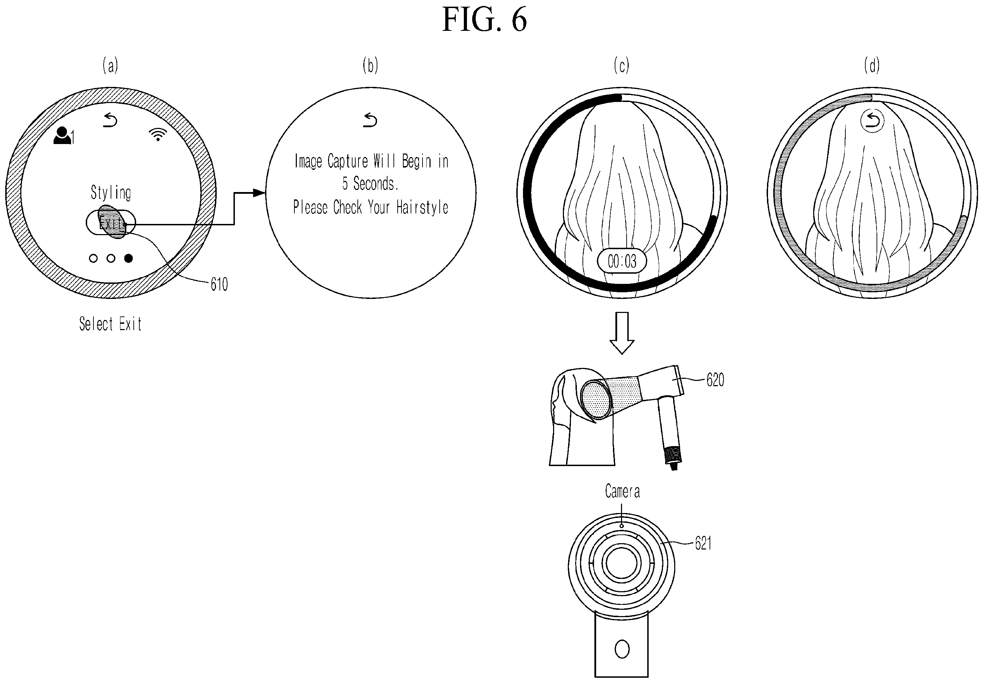

As shown in FIG.6, the hair dryer 110 of an embodiment of the disclosure, described in detail below, further includes a camera around the discharge port, unlike conventional hair dryers.

The system shown in FIG. 1 may provide a scalp and hair care guide according to a user's hairstyle and may further provide a user experience/user interface (UX/UI) that enables rapid verification of the user's hair styling by using a plurality of cameras mounted on different devices.

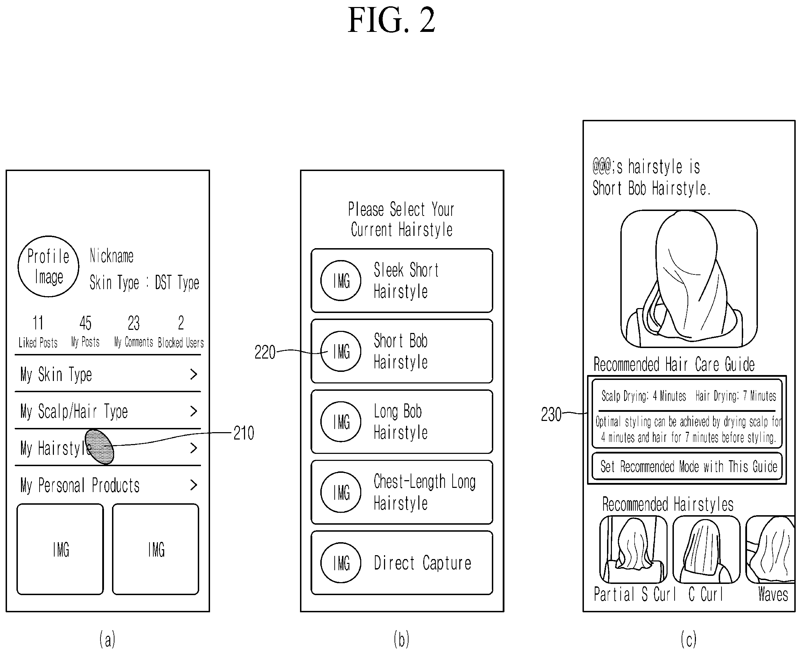

First, the various UX/UIs provided by the mobile device 120 shown in FIG. 1 will be described in more detail below with reference to FIG. 2.

FIG.2 shows a first screen of UX/UI provided by a mobile device of any one of embodiments.

First, the mobile device according to an embodiment of the disclosure provides a screen that allows the user to set a profile type, as shown in (a) of FIG. 2. Using the screen shown in (a) of FIG. 2, it is possible to select skin type, scalp/hair type, hairstyle, and the like.

In this case, when a hairstyle menu 210 shown in (a) of FIG. 2 is selected, a hairstyle selection option and a capture option may be provided, as shown in (b) of FIG. 2.

In this case, when a specific hairstyle-related option 220 (e.g., a short hairstyle that does not reach the shoulders) is selected, a hairstyle analysis result is provided as shown in (c) of FIG. 2.

In particular, the screen shown in (c) of FIG. 2 displays a recommended hair care guide 230.

To implement this, a memory is installed in the mobile device that stores mapping information that maps a scalp drying time and a hair drying time to each hairstyle, as shown in Table 1 below. Of course, the installation of the memory described above in the hair dryer also falls within another scope of the disclosure.

**[Table 1]**

| | Scalp drying time | Hair drying time |
|---|---|---|
| Sleek, short hairstyle | 3 minutes | 4 minutes |
| Short, bob hairstyle | 4 minutes | 7 minutes |
| Long bob hairstyle | 4 minutes | 10 minutes |
| Chest-length long hairstyle | 4 minutes 30 seconds | 15 minutes |

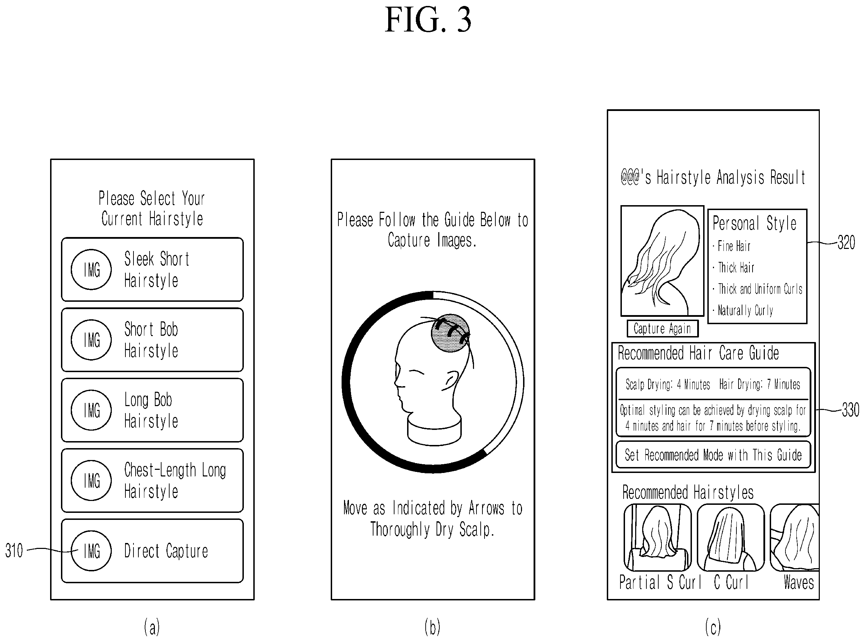

However, there may be issues if the user's current hairstyle is not among the hairstyles listed in b of FIG.2 or if the user does not know their own hairstyle. To resolve such limitations, another embodiment of the disclosure will be described in more detail below with reference to FIG. 3.

FIG. 3 illustrates a second screen of UX/UI provided by a mobile device according to any one of embodiments of the present disclosure.

When a "direct capture" option 310 is selected on the screen shown in (a) of FIG. 3, the mobile device according to the present disclosure displays an image and a guide message to facilitate capturing the user's hairstyle and head shape by using a camera, as shown in b of FIG.3.

When image capture is completed for a predetermined period of time, the mobile device according to an embodiment of the disclosure is configured to provide a hairstyle analysis result 320 and an optimal hair care guide 330 based on the analysis result, as shown in (c) of FIG. 3.

Accordingly, the user does not need to know the user's own hairstyle in advance, thereby reducing the likelihood that the user will select an incorrect hairstyle.

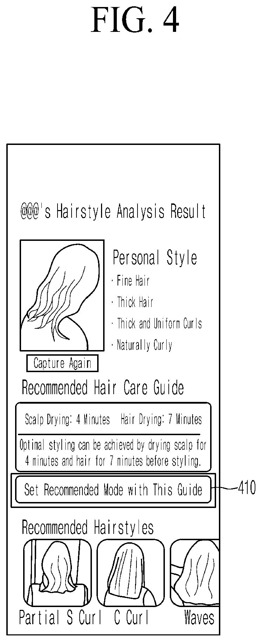

FIG. 4 illustrates a third screen of UX/UI provided by a mobile device according to any one of embodiments of the present disclosure.

As described with reference to FIG. 2, when the user directly selects their own hairstyle, or as described with reference to FIG. 3, when the current user's hairstyle is detected using the camera of the mobile device, an option 410 for setting a mode to a recommended care guide is displayed as shown in FIG. 4.

However, for reference, FIG. 4 illustrates that for the current user's hairstyle, 4 minutes are required to dry the scalp and 7 minutes are required to dry the hair, but the present disclosure is not necessarily limited thereto.

When the option 410 for setting the mode to the recommended care guide shown in FIG. 4 is selected, the mobile device transmits guide information to the server.

In this case, the guide information includes, for example, a time required for drying the scalp and a time required for drying the hair.

The hair dryer according to an embodiment of the present disclosure may be configured to establish communication with a server via a wired or wireless network when power of the hair dryer is turned on.

Therefore, the hair dryer may immediately receive guide information stored on the server.

A process of operating a hair dryer according to an embodiment of the present disclosure according to a recommended mode to which the hairstyle analysis result is applied will be described below with reference to FIG. 5.

FIG. 5 illustrates a first screen of UX/UI provided by a hair dryer according to any one of embodiments of the present disclosure. The screen shown in FIG. 5 is output through a display opposite to the discharge port of the hair dryer.

When a recommended mode 510 is selected on the screen shown in (a) of FIG. 5, the screen switches to a screen shown in (b) of FIG. 5.

After a first preset time (e.g., 3 seconds) has elapsed, a scalp care mode shown in (c) of FIG. 5 is started. For a second preset time, air at a temperature/airflow intensity optimally set for the user's hairstyle is output through the discharge port of the hair dryer. Here, the scalp care mode may alternately output cold air at 5-second intervals, for example.

As shown in Table 1 above, the second preset time described above is limited to 3 minutes for a sleek short hairstyle, 4 minutes for a short bob hairstyle, 4 minutes for a long bob hairstyle, and 4 minutes and 30 seconds for a chest-length long hairstyle.

After the second preset time elapses, the hair care mode shown in (d) of FIG. 5 starts. For the third preset time, air having a temperature/airflow intensity optimally set for the user's hairstyle is output through the discharge port of the hair dryer. Here, the hair care mode may alternately output cold air at 3-second intervals, for example.

As shown in Table 1 above, the third preset time described above is limited to 4 minutes for a sleek short hairstyle, 7 minutes for a short bob hairstyle, 10 minutes for a long bob hairstyle, and 15 minutes for a chest-length long hairstyle.

After the third preset time elapses, the styling mode shown in (e) of FIG. 5 starts. In the styling mode, the user may arbitrarily adjust the airflow intensity and temperature, and finally complete the hair care. Unlike the scalp care mode and hair care mode described above, the styling mode is configured such that cold air is not alternately output.

However, in the styling mode, as above, the user operates the hair dryer as desired, and thus it is difficult to check with a mirror alone whether the user's hair has been styled properly.

An example of resolving such problems will be described below with reference to FIG. 6.

FIG. 6 illustrates a second screen of UX/UI provided by a hair dryer according to any one of embodiments of the present disclosure. The screen shown in FIG. 6 is output through a display opposite to the discharge port of the hair dryer.

As shown in a of FIG.6, when an option 610 to exit the styling mode is selected, the hair dryer according to an embodiment of the disclosure outputs a guide message that allows the final styling result to be checked through a camera installed in the hair dryer, as shown in b of FIG.6.

That is, as shown in c of FIG.6, a camera 621 is installed around the discharge port of a hair dryer 620 such that the user does not need to change the direction of the hair dryer 620 separately.

As shown in (d) of FIG. 6, the hair dryer 620 is configured to display, in real time, a video or image captured by the camera 621 of the hair dryer 620. Accordingly, the user has the advantage of not having to use a mirror to check the back of the user's head.

To summarize, upon being powered on, the hair dryer 110 (see FIG. 1) displays at least one mode through the display. Here, at least one mode may be the recommended mode and My mode of FIG. 5 described above.

In this case, when a specific mode (recommended mode 510 shown in FIG. 5) is selected, the hair dryer 110 receives guide information from the server 100. Of course, as described above, receiving guide information directly from the mobile device 120 without passing through the server 100 falls within another scope of the present disclosure.

The hair dryer 110 controls air output through the discharge port of the hair dryer 110 according to the guide information received from the server 100. In more detail, for example, the hair dryer 110 may be configured to change at least one of the temperature, airflow intensity, or time of the airflow output through the discharge port of the hair dryer 110.

The guide information described above is generated based on an image captured through the camera of the mobile device 120, for example. A more specific embodiment related thereto has been previously described with reference to FIG. 3.

When output of airflow through the discharge port of the hair dryer 110 is finished, the hair dryer 110 is configured to display an image captured through the camera of the hair dryer 110. A more specific embodiment related thereto is previously described with reference to FIG. 6.

The camera of the hair dryer 110 and the display of the hair dryer 110 are oriented in opposite directions (e.g., 180 degrees apart).

The overall system including the mobile device 120 and the hair dryer 110 may be summarized as follows.

The mobile device 120 displays the hairstyle selection option or the capture option. A more specific embodiment related thereto is previously described with reference to FIGS. 2 and 3.

When the capture option 310 (see FIG. 3) is selected, the mobile device 120 is configured to capture the user's hair through the camera installed on the mobile device 120.

Guide information is generated by referencing the memory of the mobile device 120, and the mobile device 120 transmits the generated guide information to the server 100.

When the hair dryer 110 is powered on, the hair dryer 110 receives guide information from the server 100 and, according to the received guide information, controls the air output through the discharge port of the hair dryer 110.

To implement this, the memory stores mapping information that maps each hairstyle to a scalp drying time and a hair drying time. A more specific embodiment related thereto has been previously described with reference to Table 1 above.

The present disclosure described above may also be embodied as computer readable code stored on a computer readable recording medium. The computer readable recording medium is any data storage device that can store data which may thereafter be read by a computer. Examples of the computer readable recording medium include a hard disk drive (HDD), a solid state drive (SSD), a silicon disk drive (SDD), read-only memory (ROM), random-access memory (RAM), CD-ROM, magnetic tapes, floppy disks, optical data storage devices, carrier waves (e.g., transmission via the Internet), etc.

Although the data processing apparatus and method according to the embodiments of the present disclosure have been described as specific embodiments, this is merely an example and the present disclosure is not limited thereto and should be interpreted as having the broadest scope in accordance with the basic concept disclosed in this specification. Those of skill in the art may combine or substitute the disclosed embodiments to practice unspecified embodiments, but this also does not deviate from the scope of the present disclosure. Those of skill in the art may easily change or modify the embodiments disclosed based on this specification, and it is obvious that such changes or modifications also fall within the scope of the present disclosure.

### Mode for the Invention

Regarding various embodiments for implementing the present disclosure, descriptions that are redundant with those described in the previous section on the Best Mode for Carrying out the Invention are omitted.

### Industrial Applicability

The disclosure is applicable to hair dryers in various fields, and thus is industrially applicable.

## Claims

1. A method of controlling a hair dryer, the method comprising:
powering on the hair dryer;
displaying at least one mode through a display of the hair dryer;
based on a specific mode being selected, receiving guide information from a server; and
controlling airflow output through a discharge port of the hair dryer according to the received guide information.

2. The method of claim 1, wherein the controlling includes changing at least one of a temperature, airflow intensity, or time of the airflow output through the discharge port of the hair dryer.

3. The method of claim 2, wherein the guide information is generated based on an image captured through a camera of a mobile device.

4. The method of claim 3, further comprising, based on output of the airflow through the discharge port of the hair dryer being finished, displaying the image captured through a camera of the hair dryer.

5. The method of claim 4, wherein a direction in which the camera of the hair dryer faces and a direction in which the display of the hair dryer faces are opposite to each other.

6. A method of controlling a system including a mobile device and a hair dryer, the method comprising:
displaying a hairstyle selection option or a capture option, by the mobile device;
based on the capture option being selected, capturing hair of a user through a camera installed on the mobile device;
generating guide information by referring to a memory of the mobile device;
transmitting the generated guide information to a server, by the mobile device;
based on the hair dryer being powered on, receiving the guide information from the server;
and
controlling airflow output through a discharge port of the hair dryer according to the received guide information.

7. The method of claim 6, wherein the memory stores mapping information that maps a scalp drying time and a hair drying time to each hairstyle.

8. The method of claim 7, wherein the controlling includes changing at least one of a temperature, airflow intensity, or time of the airflow output through a discharge port of the hair dryer.

9. The method of claim 8, further comprising, based on output of the airflow through the discharge port of the hair dryer being finished, displaying the image captured through a camera of the hair dryer.

10. The method of claim 9, wherein a direction in which the camera of the hair dryer faces and a direction in which the display of the hair dryer faces are opposite to each other.
